# EUROPEAN PATENT SPECIFICATION

(11) **EP 3 306 857 B1**
(45) Date of publication and mention of the grant of the patent: **16.10.2019**
(21) Application number: 15893894.4
(22) Date of filing: 15.09.2015
(51) Int. Cl.: H04L 12/08

(54) **SAMPLING METHOD AND NETWORK CHIP**
PROBENAHMEVERFAHREN UND NETZWERKCHIP
PROCÉDÉ D'ÉCHANTILLONNAGE ET PUCE DE RÉSEAU

(30) Priority: 02.06.2015 CN 201510297025
(43) Date of publication of application: 11.04.2018
(73) Proprietor: ZTE Corporation, Shenzhen, Guangdong 518057 (CN)
(72) Inventor: JIANG, Haiming, Shenzhen Guangdong 518057 (CN); WANG, Zhichun, Shenzhen Guangdong 518057 (CN); KONG, Lingli, Shenzhen Guangdong 518057 (CN)
(74) Representative: Aipex B.V.
(86) International application number: PCT/CN2015/089650
(87) International publication number: WO 2016/192238

(56) References cited:
- CN-A- 103 259 668
- CN-A- 104 009 884
- GB-A- 2 473 101
- US-A1- 2008 043 897
- US-A1- 2008 291 915

## Description

### Technical Field

The present application relates to, but not limited to, a communication technology.

### Background

A Netflow technology is a statistical and publishing technology based on netflow information, capable of analyzing and counting behavioral patterns in detail for communication traffic of an Internet Protocol (IP)/Multi-Protocol Label Switching (MPLS) network through a Netflow protocol, and providing detailed statistical data about network running. Traffic information obtained by statistics via the Netflow technology may bring the following applications: netflow analysis and capacity planning which are capable of knowing information such as an overall netflow, an occupancy situation of an important application bandwidth and variation trends thereof as well as a usage pattern of a user by means of long-time data acquisition, and providing a decision reference for future network planning and upgrade; Traffic accounting, which is capable of implementing, based on Netflow, multiple accounting modes based on, such as, flow, different periods of time, Quality of Service (QoS), an application type and an autonomous domain; and network monitoring, Netflow providing a near real-time network monitoring capability. When there is a network problem, information provided by Netflow can assist in quickly locating the problem or finding a potential network problem.

The Netflow technology usually implements traffic sampling by a counter through a network chip (such as an Application Specific Integrated Circuit (ASIC) chip in network equipment). For example, a sampling ratio is N:1, a typical method is that the network chip makes statistics on messages, and when a count reaches N, the network chip copies and samples the messages, and then clears the counter to be zero.

A general operation on a counter by a network chip in the related technical solution is a Read+Modify+Write (RMW) operation, which is time-consuming and greatly influences the forwarding performance of the network chip. Due to the co-existence of multiple sampling services at present such as co-existence of port sampling, sampling of various message types under a port and flow sampling, these types of sampling are superposed together, thereby resulting in an over-large access bandwidth between the network chip and the counter, and reducing the forwarding performance of the network chip.

The document GB 2473101 A discloses a signal processor counting the number of input data packets and or the total size of the input data packets. The count is stored in a first memory location. When the value of the count exceeds the maximum value which can be stored in the memory location, a flag is set in a second memory location. The first memory location may then store the difference between the correct count value and the maximum value which may be stored in the location. The processor may maintain several counts for different types of packet. The types of packet may be identified by a field in the packet. The signal processor may be part of a network interface card and the counts may be statistical information about the packets being transmitted on the network.

The document US 2008/043897 A1 discloses a hybrid counter array device for counting events with interrupt indication includeing a first counter portion comprising N counter devices, each for counting signals representing event occurrences and providing a first count value representing lower order bits. An overflow bit device associated with each respective counter device is additionally set in response to an overflow condition. The hybrid counter array includes a second counter portion comprising a memory array device having N addressable memory locations in correspondence with the N counter devices, each addressable memory location for storing a second count value representing higher order bits. An operatively coupled control device monitors each associated overflow bit device and initiates incrementing a second count value stored at a corresponding memory location in response to a respective overflow bit being set.; The incremented second count value is compared to an interrupt threshold value stored in a threshold register, and, when the second counter value is equal to the interrupt threshold value, a corresponding "interrupt arm" bit is set to enable a fast interrupt indication. On a subsequent roll-over of the lower bits of that counter, the interrupt will be fired.

### Summary

The following is a brief summary for a subject described herein in detail. The brief summary is not intended to restrict the scope of protection of claims.

A sampling method and a network chip according independent claims are provided. Further improvements and embodiments are provided in the dependent claims.

Also provided is a sampling method, including:
when a network chip determines that sampling needs to be performed, the network chip performing an X-addition operation on an counter index of a counter upon reception of a message, and reading a return value of the counter, herein the return value includes a value of an Overflow Flag (OF) and an counter index of the counter after the X-addition operation is performed, and herein, X is a pre-set value, and the value of the OF includes: a first pre-set value or a second pre-set value, and herein, the first pre-set value indicates that the counter overflows after the X-addition operation is performed, and the second pre-set value indicates that the counter does not overflow after the X-addition operation is performed;
the network chip judging whether the value of the OF is the first pre-set value; and
if the value of the OF is the first pre-set value, the network chip performing the sampling.

In an exemplary embodiment, the method further includes:
if the value of the OF is the second pre-set value, the network chip forwarding the message without performing the sampling.

In an exemplary embodiment, before the above steps, the method further includes:
the network chip acquiring sampling information, wherein the sampling information includes: a Sample Flag (SF), the counter index and X, herein the SF includes a first flag and a second flag, the first flag is used to indicate that the network chip needs to perform the sampling, and the second flag is used to indicate that the network chip does not need to perform the sampling;
when the SF obtained by the network chip is the first flag, determining that the sampling needs to be performed.

In an exemplary embodiment, when a digit of the counter is M and a sampling ratio is N, X is 2^{M}/N, and both M and N are positive integers.

In an exemplary embodiment, the sampling includes:
port sampling and flow sampling, herein the port sampling includes: unicast-type sampling, multicast-type sampling, or Multi-Protocol Label Switching, MPLS-type sampling.

Also provided is a network chip,
a processing unit, configured to, when determining that sampling needs to be performed, perform an X-addition operation on a counter index of a counter upon reception of a message, and read a return value of the counter, herein the return value includes a value of an OF and an index counter after the X-addition operation is performed, and herein X is a pre-set value, and the value of the OF includes: a first pre-set value or a second pre-set value, and herein, the first pre-set value indicates that the counter overflows after the X-addition operation is performed, and the second pre-set value indicates that the counter does not overflow after the X-addition operation is performed;
a judging unit, configured to judge whether the value of the OF is the first pre-set value; and
a sampling unit, configured to, if the value of the OF is the first pre-set value, perform the sampling.

In an exemplary embodiment, the network chip further includes:
a forwarding unit, configured to, if the value of the OF is the second pre-set value, forward the message without performing the sampling.

In an exemplary embodiment, the network chip further includes:
an acquisition unit, configured to acquire sampling information, herein the sampling information includes: an SF, the counter index and X, herein the SF includes a first flag and a second flag, the first flag is used to indicate that the network chip needs to perform the sampling, and the second flag is used to indicate that the network chip does not need to perform the sampling; and
a determination unit, configured to, when the SF obtained by the network chip is the first flag, determine that the sampling needs to be performed.

In an exemplary embodiment, when a digit of the counter is M and a sampling ratio is N, X is 2^{M}/N, and both M and N are positive integers.

In an exemplary embodiment, the sampling includes:
port sampling and flow sampling, herein the port sampling includes: unicast-type sampling, multicast-type sampling, or Multi-Protocol Label Switching, MPLS-type sampling.

Also provided is a computer-readable storage medium stores a computer-executable instruction, the computer-executable instruction being used to execute the method as mentioned above in any item.

The embodiments of the present invention provide a sampling method and a network chip. When it is determined that a network chip needs to perform sampling, the network chip performs an X-addition operation on a counter index of a counter upon reception of a message, and reads a return value of the counter. Herein the return value includes the value of an OF and a counter index after the X-addition operation is performed, and herein, X is a pre-set value, and the value of the OF includes: a first pre-set value or a second pre-set value. And the first pre-set value indicates that the counter overflows after the X-addition operation is performed, and the second pre-set value indicates that the counter does not overflow after the X-addition operation is performed. The network chip judges whether the value of the OF is the first pre-set value, and if the value of the OF is the first pre-set value, the network chip performs sampling. Compared with the related technical solution in which superposition of many types of sampling may result in an over-large access bandwidth between a network chip and a counter, the sampling method provided in the embodiment of the present invention can effectively reduce the access bandwidth between the network chip and the counter and improve the forwarding performance.

After the drawings and the detailed descriptions are read and understood, other aspects may be understood.

### Brief Description of Drawings

FIG. 1 is a schematic diagram of connection between a network chip and a counter.
FIG. 2 is a schematic diagram of a port table implementing port sampling in the related art.
FIG. 3 is a flowchart implementing port sampling in the related art.
FIG. 4 is a flowchart 1 of a sampling method according to an embodiment of the present invention.
FIG. 5 is a flowchart 2 of a sampling method according to an embodiment of the present invention.
FIG. 6 is a structure diagram 1 of a network chip according to an embodiment of the present invention.
FIG. 7 is a structure diagram 2 of a network chip according to an embodiment of the present invention.
FIG. 8 is a schematic diagram of a port table provided in Embodiment 1 of the present invention.
FIG. 9 is a structure diagram of information returned by a counter in Embodiment 1 of the present invention.
FIG. 10 is a flowchart implementing sampling in Embodiment 1 of the present invention.

### Detailed Description

The preferred embodiments of the present invention will be illustrated herein below with reference to the drawings in detail. It is important to note that embodiments in the present application and the characteristics in the embodiments may be combined mutually under the condition of no conflicts.

The steps shown in the flowchart of the drawings may be executed in a computer system including, for example, a set of computer-executable instructions. Moreover, although a logic sequence is shown in the flowchart, the shown or described steps may be executed in a sequence different from this sequence under certain conditions.

For convenience of understanding of the technical solution provided in the embodiment of the present invention, a sampling method in the related art is simply introduced as follows.

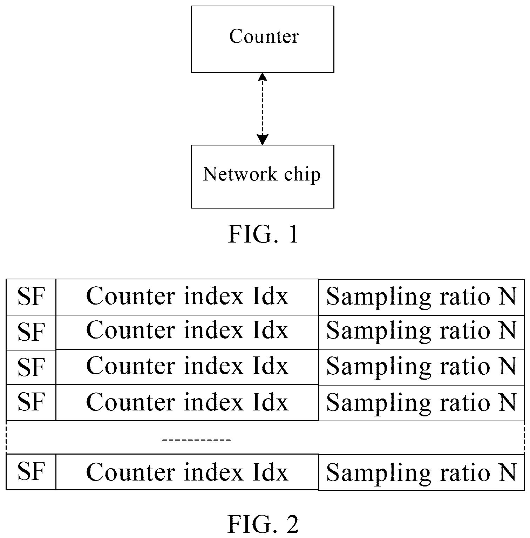

FIG. 1 is a schematic diagram of connection between a network chip and a counter. After receiving messages, a network chip counts the messages. And a counter is usually stored in a Static Random Access Memory (SRAM) or a Synchronous Dynamic Random Access Memory (SDRAM), and the network chip performs a three-step operation including reading, count accumulation and write-back on the counter.

FIG. 2 is a schematic diagram of a port table implementing port sampling in the related art. An SF is a sample flag, indicating whether to sample a message, a counter index Idx is a counter index corresponding to a sample item, and N is a sampling ratio under the condition that the sampling ratio is configured as N:1.

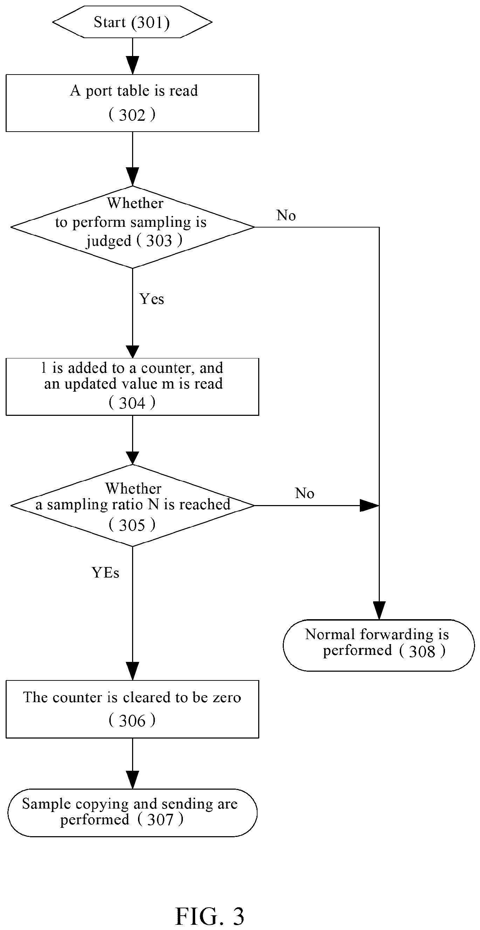

FIG. 3 is a flowchart implementing port sampling in the related art. The steps are as follows.

In 301, the flow is started.

In 302, a network chip reads a port table, and acquires sampling information.

In 303, the network chip judges a sampling flag SF read in step 302; if SF=0, sampling is not performed, and step 308 is executed; and if SF=1, step 304 is executed.

In 304, the network chip performs a 1-addition operation on a counter by taking a counter index Idx read in step 302 as an index, and reads a value m of an updated counter index Idx returned by the counter.

In 305, the network chip judges whether to reach a sampling ratio.

If m<N, the sampling ratio is not reached, and step 308 is executed. Otherwise, step 306 is executed.

In 306, the network chip clears the counter to be zero.

In 307, the network chip enters a sampling flow, copies a message, and sends it to a destination for processing.

In 308, the network chip normally forwards the message.

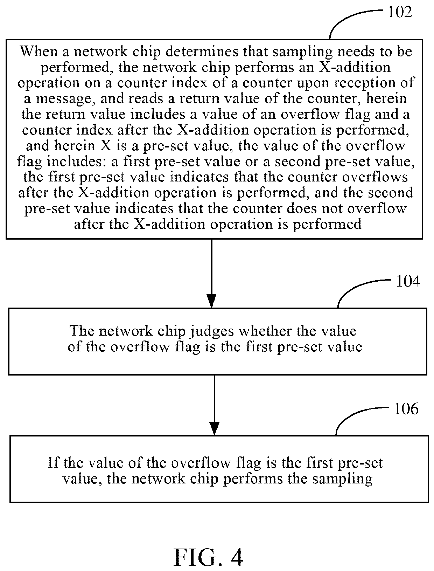

An embodiment of the present invention provides a sampling method. As shown in FIG. 4, the method includes the steps as follows.

In step 102, when it is determined that a network chip needs to perform sampling, the network chip performs an X-addition operation on a counter index upon reception of a message, and reads a return value of a counter. Herein the return value includes the value of an OF and a counter index after the X-addition operation is performed, and herein, X is a pre-set value, and the value of the OF includes: a first pre-set value or a second pre-set value. The first pre-set value indicates that the counter overflows after the X-addition operation is performed, and the second pre-set value indicates that the counter does not overflow after the X-addition operation is performed.

In step 104, the network chip judges whether the value of the OF is the first pre-set value.

In step 106, if the value of the OF is the first pre-set value, the network chip performs sampling.

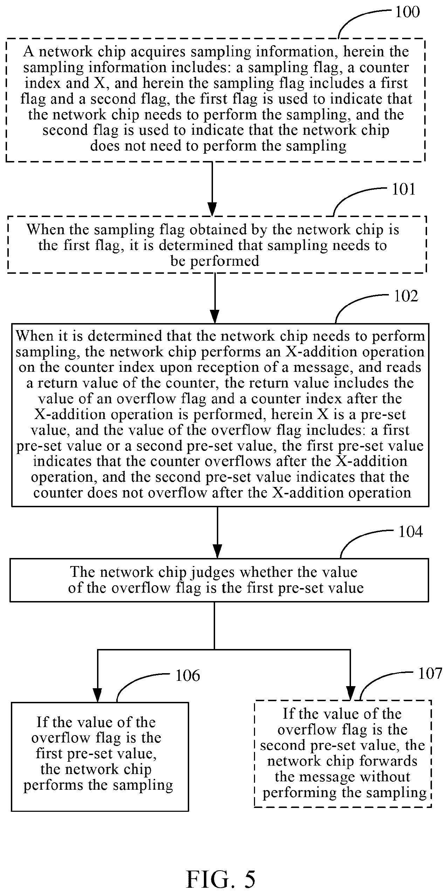

In an exemplary embodiment, as shown in FIG. 5, the method may further include the step as follows.

In step 107, if the value of the OF is the second pre-set value, the network chip forwards the message without sampling.

In an exemplary embodiment, as shown in FIG. 5, before that, the method may further include the steps as follows.

In step 100, the network chip acquires sampling information. Herein the sampling information includes an SF, the counter index and X, and herein the SF includes a first flag and a second flag. The first flag is used to indicate that the network chip needs to perform sampling, and the second flag is used to indicate that the network chip does not need to perform sampling.

In step 101, when the SF obtained by the network chip is the first flag, it is determined that sampling needs to be performed.

Exemplarily, the first flag included by the SF is 1, the second flag is 0, and when SF=1, it is determined that the network chip needs to perform sampling; and when SF=0, it is determined that the network chip does not need to perform sampling.

When the digit of the counter is M and the sampling ratio is N, X is 2^{M}/N, and both M and N are positive integers.

The sampling includes: port sampling and flow sampling. And the port sampling includes: unicast-type sampling, multicast-type sampling, or MPLS-type sampling.

The technical solution provided in the embodiment of the present invention is effective to various types of sampling such as port sampling and flow sampling. The flow sampling can be implemented by means of Access Control Lists (ACL). In addition, the embodiment of the present invention is not limited to application to the above-mentioned sampling mode.

The embodiment of the present invention provides a sampling method. When it is determined that a network chip needs to perform sampling, the network chip performs an X-addition operation on a counter index upon reception of a message, and reads a return value of a counter. Herein the return value includes the value of an OF and a counter index after the X-addition operation is performed, and herein X is a pre-set value. And the value of the OF includes: a first pre-set value or a second pre-set value, the first pre-set value indicates that the counter overflows after the X-addition operation is performed, and the second pre-set value indicates that the counter does not overflow after the X-addition operation is performed. The network chip judges whether the value of the OF is the first pre-set value, and if the value of the OF is the first pre-set value, the network chip performs sampling. Compared with the related technical solution in which superposition of many types of sampling may result in an over-large access bandwidth between a network chip and a counter, the sampling method provided in the embodiment of the present invention can effectively reduce the access bandwidth between the network chip and the counter and improve the forwarding performance.

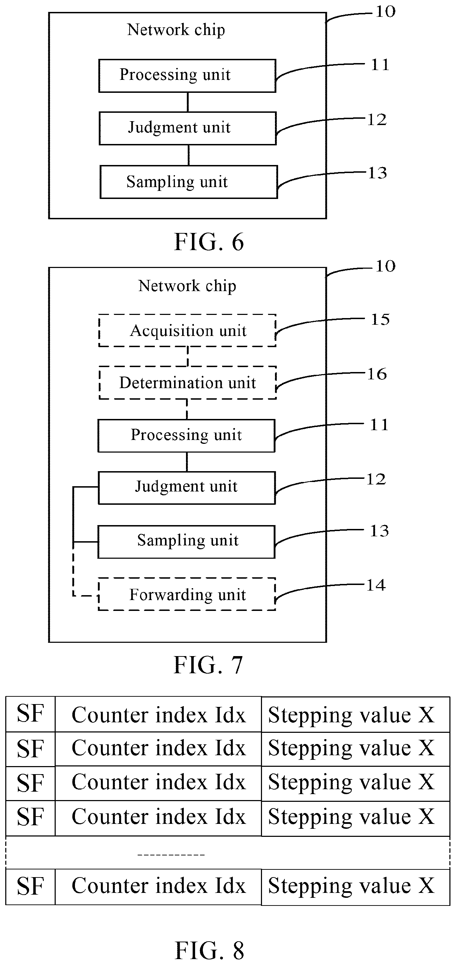

An embodiment of the present invention provides a network chip 10. As shown in FIG. 6, the network chip 10 includes: a processing unit 11, a judging unit 12 and a sampling unit 13.

The processing unit 11 is configured to perform, when it is determined that sampling needs to be performed, an X-addition operation on a counter index upon reception of a message, and read a return value of a counter. Herein the return value includes the value of an OF and a counter index after the X-addition operation is performed, and herein X is a pre-set value. And the value of the OF includes: a first pre-set value or a second pre-set value, the first pre-set value indicates that the counter overflows after the X-addition operation is performed, and the second pre-set value indicates that the counter does not overflow after the X-addition operation is performed.

The judging unit 12 is configured to judge whether the value of the OF is the first pre-set value.

The sampling unit 13 is configured to perform, if the value of the OF is the first pre-set value, sampling.

As shown in FIG. 7, the network chip may further include: a forwarding unit 14.

The forwarding unit 14 is configured to forward, if the value of the OF is the second pre-set value, the message without sampling.

As shown in FIG. 7, the network chip may further include: an acquisition unit 15 and a determination unit 16.

The acquisition unit 15 is configured to acquire sampling information. Herein the sampling information includes: an SF, the counter index and X, and herein the SF includes a first flag and a second flag, the first flag is used to indicate that the network chip needs to perform sampling, and the second flag is used to indicate that the network chip does not need to perform sampling.

The determination unit 16 is configured to determine, when the SF obtained by the network chip is the first flag, that sampling needs to be performed.

When the digit of the counter is M and the sampling ratio is N, X is 2^{M}/N, and both M and N are positive integers.

The sampling includes: port sampling and flow sampling, herein the port sampling includes: unicast-type sampling, multicast-type sampling, or MPLS-type sampling.

The present embodiment is used to implement each of the above-mentioned method embodiments. The working flow and working principle of each unit in the present embodiment refer to descriptions in each of the above-mentioned method embodiments, and will not be elaborated herein.

The embodiment of the present invention provides a network chip. When it is determined that a network chip needs to perform sampling, the network chip performs an X-addition operation on a counter index upon reception of a message, and reads a return value of a counter. Herein the return value includes the value of an OF and a counter index after the X-addition operation, and herein X is a pre-set value, and the value of the OF includes: a first pre-set value or a second pre-set value, the first pre-set value indicating that the counter overflows after the X-addition operation is performed, and the second pre-set value indicating that the counter does not overflow after the X-addition operation is performed. The network chip judges whether the value of the OF is the first pre-set value, and if the value of the OF is the first pre-set value, the network chip performs sampling. Compared with the related technical solution in which superposition of many types of sampling may result in an over-large access bandwidth between a network chip and a counter, the sampling method provided in the embodiment of the present invention can effectively reduce the access bandwidth between the network chip and the counter and improve the forwarding performance.

### Embodiment 1

FIG. 8 is a schematic diagram of a port table in an embodiment of the present invention. Compared with FIG. 2, a field is added, the field stores a pre-set sampling stepping value X. Exemplarily, if a sampling ratio is configured as N:1, it is necessary to pre-calculate X. If the count bit width of a counter is M, rollover is performed when a count is accumulated to 2^{M}-1, and 2^{M}/N is set as a stepping value X written into a port table. For example, when M is 10 and N=32, X=2^{M}/N=32. What is worth mentioning is that when 2^{M}/N is not an integer, X may be a value obtained by rounding 2^{M}/N under some conditions that it is unnecessary to strictly satisfy the sampling ratio value N.

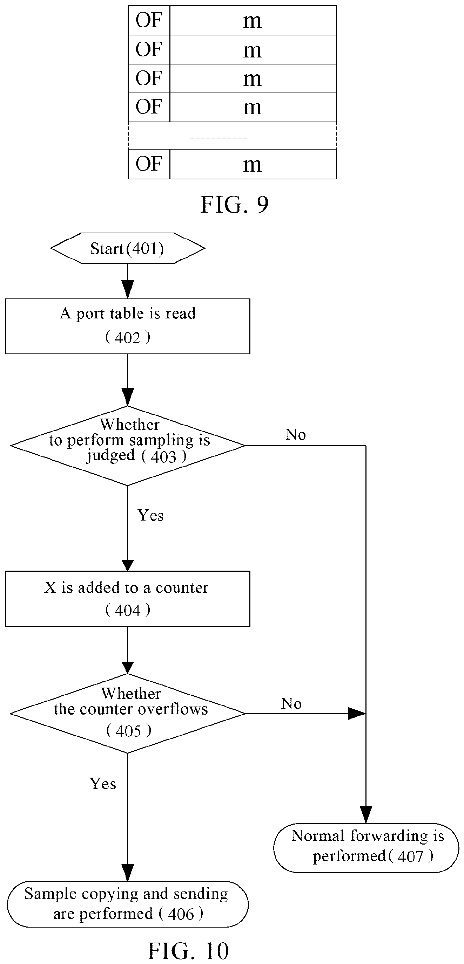

FIG. 9 is a structure diagram of information returned by a counter in an embodiment of the present invention. Compared with a traditional counter, it is necessary to add an OF into information returned by the counter each time. Since a network chip in the technical solution provided in the embodiment of the present invention does not clear the counter to be zero, when the counter makes a count, rollover will be caused, and the OF will be set as a first flag such as 1. And the OF may reflect an overflow state of the counter, every time a maximum value 2^{M}-1 of the counter is exceeded, the OF will be set as a first flag (e.g., the OF is set as 1), a result returned by a network chip after reading a modified count of the counter also contains the value of a current OF. In addition, it is important to note that if overflow is not caused during updating of the counter, the OF is maintained as a second flag. For example, the second flag may be 0, that is, if overflow is not caused during updating of the counter, the OF is maintained as 0.

In the technical solution for sampling in the related art, after the network chip receives each message, 1 is added to the counter. In the technical solution provided in the embodiment of the present invention, after the network chip receives each message, a pre-set sampling stepping value X instead of 1 is added to the counter. In the technical solution for sampling in the related art, the count of the counter is accumulated to N, the network chip clears the counter to be zero, and a new round of sampling count is restarted, i.e., 0, 1,2, ..., N, 0 (a resetting operation of the network chip), 1, 2, ...; and the counter in the embodiment of the present invention is naturally rolled over. For example, the digit of the counter is M, and a stepping value at each time is X, i.e., the count value is 0, X, 2X, ..., 0 (the counter steps for N times and is naturally rolled over), X, 2X, ....

FIG. 10 is a flowchart implementing sampling in the present embodiment and includes following steps..

In 401, the flow is started.

In 402, a network chip reads a port table, and acquires sampling information.

In 403, the network chip judges an SF read in step 402; and if SF=0, sampling is not performed, and step 407 is executed; and if SF=1, step 404 is executed.

In 404, the network chip performs an X-addition operation on a counter by taking a counter index Idx read in step 402 as an index, and reads a return value of the counter, including an OF and a value m of the updated counter index Idx.

In 405, the network chip judges the OF in the return value of the counter in step 404.

If OF=0, a sampling ratio is not reached, and step 407 is executed. Otherwise, step 406 is executed.

The counter in the embodiment of the present invention is naturally rolled over, for example, the digit of the counter is M, a stepping value at each time is X, i.e., the count value is 0, X, 2X, ..., 0 (the counter steps for N times and is naturally rolled over), X, 2X, ..., the counter will be rolled over every time the count is accumulated to 2^{M}-1, and OF=1. When OF=1, it is indicated that the counter overflows, and it is necessary to sample the message. Otherwise, a sampling threshold is not reached, and it is unnecessary to perform sampling.

In 406, the network chip enters a sampling flow, copies a message, and sends it to a destination for processing.

In 407, the network chip normally forwards the message.

Compared with the related art, the technical solution provided in the embodiment of the present invention has the advantages that due to a large delay of access of a network chip to a counter, a sampling judgment flow in the related art is improved, and an OF is added into information returned after the counter updates a count each time as for the problem of reduction of the forwarding performance caused by repeated access of the network chip to the counter in the sampling judgment flow in the related art. Thus, the count of access of the network chip to the counter is decreased, an access bandwidth between the network chip and the counter is greatly reduced, and an application value is great.

The device embodiment described above is only schematic. For example, division of the modules is only logic function division, and other division manners may be adopted during practical implementation. In addition, connection between the displayed or discussed modules may be implemented through some interfaces, and may be electrical and mechanical or adopt other forms. All the modules may or may not be physically separated, and may or may not be physical units. Part or all of the modules may be selected to achieve the purpose of the solutions of the present embodiment according to a practical requirement.

In addition, each function module in each embodiment of the present invention may be integrated into a processing module, each module may also exist independently and physically, and two or more than two modules may also be integrated into a module. The above-mentioned integrated module may be implemented in a form of hardware, and may also be implemented in forms of hardware and software function module.

The integrated module implemented in a form of software function unit may be stored in a computer-readable storage medium. The above-mentioned software function module is stored in a storage medium, including a plurality of instructions used to enable computer equipment (which may be a personal computer, a server, network equipment or the like) to execute part of the steps of the method in each embodiment of the present invention. The foregoing storage medium includes: various media capable of storing program codes such as a U disk, a mobile hard disk, a Read-Only Memory (ROM), a Random Access Memory (RAM), a magnetic disk or an optical disk.

### Industrial Applicability

By means of the embodiment of the present invention, the count of access of a network chip to a counter is decreased, and an access bandwidth between the network chip and the counter can be effectively reduced, thereby improving the forwarding performance.

## Claims

1. A sampling method, comprising:
Acquiring (100), by a network chip, sampling information, the sampling information comprising: a Sample Flag, SF, a counter index of a counter and X, wherein the SF comprises a first flag and a second flag, the first flag is used to indicate that the network chip needs to perform sampling, and the second flag is used to indicate that the network chip does not need to perform the sampling;
when the SF obtained by the network chip is the first flag, determining (101) that the sampling needs to be performed;
when the network chip determines that the sampling needs to be performed, performing (102), by the network chip, an X-addition operation on the counter index upon reception of a message, and reading (102) a return value of the counter, wherein the return value comprises a value of an Overflow Flag, OF and a counter index of the counter after the X-addition operation is performed, wherein X is a pre-set value, and the value of the OF comprises: a first pre-set value or a second pre-set value, and wherein the first pre-set value indicates that the counter overflows after the X-addition operation is performed, and the second pre-set value indicates that the counter does not overflow after the X-addition operation is performed;
judging (104), by the network chip, whether the value of the OF is the first pre-set value; and
if the value of the OF is the first pre-set value, performing (106), by the network chip, the sampling,
**characterised in that** when a digit of the counter is M and a sampling ratio is N, X is 2^{M}/N, and M and N are positive integers.

2. The method according to claim 1, further comprising:
if the value of the OF is the second pre-set value, forwarding (107), by the network chip, the message without the sampling.

3. The method according to claim 1, wherein the sampling comprises:
port sampling and flow sampling, wherein the port sampling comprises: unicast-type sampling, multicast-type sampling, or Multi-Protocol Label Switching, MPLS-type sampling.

4. A network chip (10), comprising:
an acquisition unit (15), configured to acquire sampling information, wherein the sampling information comprises: a Sample Flag, SF, a counter index of a counter and X, wherein the SF comprises a first flag and a second flag, the first flag is used to indicate that the network chip needs to perform sampling, and the second flag is used to indicate that the network chip does not need to perform the sampling;
a determination unit (16), configured to, when the SF obtained by the network chip is the first flag, determine that the sampling needs to be performed;
a processing unit (11), configured to, when determining that the sampling needs to be performed, perform an X-addition operation on the counter index upon reception of a message, and read a return value of the counter, wherein the return value comprises a value of an Overflow Flag, OF, and a counter index after the X-addition operation is performed, wherein X is a pre-set value, and the value of the OF comprises: a first pre-set value or a second pre-set value, and wherein, the first pre-set value indicates that the counter overflows after the X-addition operation is performed, and the second pre-set value indicates that the counter does not overflow after the X-addition operation is performed;
a judging unit (12), configured to judge whether the value of the OF is the first pre-set value; and
a sampling unit (13), configured to, if the value of the OF is the first pre-set value, perform the sampling,
**characterised in that** when a digit of the counter is M and a sampling ratio is N, X is 2^{M}/N, and M and N are positive integers.

5. The network chip according to claim 4, further comprising:
a forwarding unit (14), configured to, if the value of the OF is the second pre-set value, forward the message without performing the sampling.

6. The network chip according to claim 4, wherein the sampling comprises:
port sampling and flow sampling, and wherein the port sampling comprises: unicast-type sampling, multicast-type sampling, or Multi-Protocol Label Switching, MPLS-type sampling.

7. A computer-readable storage medium, storing a computer-executable instruction, the computer-executable instruction being used to execute the method according to any one of claims 1 to 3.

## Patentansprüche

1. Probenahmeverfahren, umfassend:
Erfassen (100) von Probenahmeinformationen durch einen Netzwerkchip, wobei die Probenahmeinformationen Folgendes umfassen: ein Probenahme-Flag (SF), einen Zählerindex eines Zählers und X, wobei das SF ein erstes Flag und ein zweites Flag umfasst, wobei das erste Flag verwendet wird, um anzugeben, dass der Netzwerkchip eine Probenahme durchführen muss, und das zweite Flag verwendet wird, um anzugeben, dass der Netzwerkchip die Probenahme nicht durchführen muss;
wenn das durch den Netzwerkchip erlangte SF das erste Flag ist, Bestimmen (101), dass die Probenahme durchgeführt werden muss;
wenn der Netzwerkchip bestimmt, dass die Probenahme durchgeführt werden muss, Durchführen (102) einer X-Additionsoperation an dem Zählerindex durch den Netzwerkchip bei Empfang einer Nachricht, und Lesen (102) eines Rückgabewerts des Zählers, wobei der Rückgabewert einen Wert eines Overflow-Flags (OF) und einen Zählerindex des Zählers, nachdem die X-Additionsoperation durchgeführt wurde, umfasst, wobei X ein vorab festgelegter Wert ist und der Wert des OF umfasst: einen ersten vorab festgelegten Wert oder einen zweiten vorab festgelegten Wert, und wobei der erste vorab festgelegte Wert angibt, dass der Zähler überläuft, nachdem die X-Additionsoperation durchgeführt wurde, und der zweite vorab festgelegte Wert angibt, dass der Zähler nicht überläuft, nachdem die X-Additionsoperation durchgeführt wurde;
Beurteilen (104), durch den Netzwerkchip, ob der Wert des OF der erste vorab festgelegte Wert ist; und
wenn der Wert des OF der erste vorab festgelegte Wert ist, Durchführen (106) der Probenahme durch den Netzwerkchip,
**dadurch gekennzeichnet, dass** X gleich 2^{M}/N ist und M und N positive Ganzzahlen sind, wenn eine Ziffer des Zählers M ist und ein Probenahmeverhältnis N ist.

2. Verfahren nach Anspruch 1, ferner umfassend:
wenn der Wert des OF der zweite vorab festgelegte Wert ist, Weiterleiten (107) der Nachricht ohne die Probenahme durch den Netzwerkchip.

3. Verfahren nach Anspruch 1, wobei die Probenahme Folgendes umfasst:
Port-Probenahme und Flow-Probenahme, wobei die Port-Probenahme Folgendes umfasst: Unicast-Probenahme, Multicast-Probenahme oder Multi-Protocol Label Switching (MPLS)-Probenahme.

4. Netzwerkchip (10), umfassend:
eine Erfassungseinheit (15), konfiguriert zum Erfassen von Probenahmeinformationen, wobei die Probenahmeinformationen Folgendes umfassen: ein Probenahme-Flag (SF), einen Zählerindex eines Zählers und X, wobei das SF ein erstes Flag und ein zweites Flag umfasst, wobei das erste Flag verwendet wird, um anzugeben, dass der Netzwerkchip eine Probenahme durchführen muss, und das zweite Flag verwendet wird, um anzugeben, dass der Netzwerkchip die Probenahme nicht durchführen muss;
eine Bestimmungseinheit (16), konfiguriert zum Bestimmen, dass die Probenahme durchgeführt werden muss, wenn das durch den Netzwerkchip erlangte SF das erste Flag ist;
eine Verarbeitungseinheit (11), konfiguriert zum Durchführen einer X-Additionsoperation an dem Zählerindex bei Empfang einer Nachricht, wenn bestimmt wird, dass die Probenahme durchgeführt werden muss, und Lesen eines Rückgabewerts des Zählers, wobei der Rückgabewert einen Wert eines Overflow-Flags (OF) und einen Zählerindex, nachdem die X-Additionsoperation durchgeführt wurde, umfasst, wobei X ein vorab festgelegter Wert ist und der Wert des OF umfasst: einen ersten vorab festgelegten Wert oder einen zweiten vorab festgelegten Wert, und wobei der erste vorab festgelegte Wert angibt, dass der Zähler überläuft, nachdem die X-Additionsoperation durchgeführt wurde, und der zweite vorab festgelegte Wert angibt, dass der Zähler nicht überläuft, nachdem die X-Additionsoperation durchgeführt wurde;
eine Beurteilungseinheit (12), konfiguriert zum Beurteilen, ob der Wert des OF der erste vorab festgelegte Wert ist; und
eine Probenahmeeinheit (13), konfiguriert zum Durchführen der Probenahme, wenn der Wert des OF der erste vorab festgelegte Wert ist,
**dadurch gekennzeichnet, dass** X gleich 2^{M}/N ist und M und N positive Ganzzahlen sind, wenn eine Ziffer des Zählers M ist und ein Probenahmeverhältnis N ist.

5. Netzwerkchip nach Anspruch 4, ferner umfassend:
eine Weiterleitungseinheit (14), konfiguriert zum Weiterleiten der Nachricht ohne Durchführen der Probenahme, wenn der Wert des OF der zweite vorab festgelegte Wert ist.

6. Netzwerkchip nach Anspruch 4, wobei die Probenahme Folgendes umfasst:
Port-Probenahme und Flow-Probenahme, und wobei die Port-Probenahme Folgendes umfasst: Unicast-Probenahme, Multicast-Probenahme oder Multi-Protocol Label Switching (MPLS)-Probenahme.

7. Computerlesbares Speichermedium, das eine durch einen Computer ausführbare Anweisung speichert, wobei die durch einen Computer ausführbare Anweisung verwendet wird, um das Verfahren nach einem der Ansprüche 1 bis 3 auszuführen.

## Revendications

1. Procédé d'échantillonnage comprenant le fait :
d'acquérir (100), par une puce de réseau, des informations d'échantillonnage, les informations d'échantillonnage comprenant : un Indicateur d'Échantillon, SF, un index de compteur d'un compteur et X, dans lequel le SF comprend un premier indicateur et un deuxième indicateur, le premier indicateur est utilisé pour indiquer que la puce de réseau doit effectuer un échantillonnage, et le deuxième indicateur est utilisé pour indiquer que la puce de réseau n'a pas besoin d'effectuer l'échantillonnage ;
de déterminer (101), lorsque le SF obtenu par la puce de réseau est le premier indicateur, que l'échantillonnage doit être effectué ;
d'effectuer (102), lorsque la puce de réseau détermine que l'échantillonnage doit être effectué, par la puce de réseau, une opération d'addition de X sur l'index de compteur à la réception d'un message et de lire (102) une valeur de retour du compteur, où la valeur de retour comprend une valeur d'un Indicateur de Dépassement de Capacité, OF et un index de compteur du compteur après que l'opération d'addition de X est effectuée, où X est une valeur prédéfinie, et la valeur du OF comprend : une première valeur prédéfinie ou une deuxième valeur prédéfinie, et où la première valeur prédéfinie indique que le compteur dépasse la capacité après que l'opération d'addition de X est effectuée, et la deuxième valeur prédéfinie indique que le compteur ne dépasse pas la capacité après que l'opération d'addition de X est effectuée ;
de juger (104), par la puce de réseau, si la valeur du OF est la première valeur prédéfinie ;
et
si la valeur du OF est la première valeur prédéfinie, d'effectuer (106), par la puce de réseau, l'échantillonnage,
**caractérisé en ce que** lorsqu'un chiffre du compteur est M et qu'un rapport d'échantillonnage est N, X est 2^{M}/N, et M et N sont des nombres entiers positifs.

2. Procédé selon la revendication 1, comprenant en outre le fait :
si la valeur du OF est la deuxième valeur prédéfinie, de transférer (107), par la puce de réseau, le message sans échantillonnage.

3. Procédé selon la revendication 1, dans lequel l'échantillonnage comprend :
un échantillonnage de port et un échantillonnage de flux, où l'échantillonnage de port comprend : un échantillonnage de type à monodiffusion, un échantillonnage de type à multidiffusion, ou un échantillonnage de type à commutation de labels multiprotocole, MPLS.

4. Puce de réseau (10), comprenant:
une unité d'acquisition (15), configurée pour acquérir des informations d'échantillonnage, où les informations d'échantillonnage comprennent : un Indicateur d'Échantillon, SF, un index de compteur d'un compteur et X, où le SF comprend un premier indicateur et un deuxième indicateur, le premier indicateur est utilisé pour indiquer que la puce de réseau doit effectuer un échantillonnage, et le deuxième indicateur est utilisé pour indiquer que la puce de réseau n'a pas besoin d'effectuer l'échantillonnage ;
une unité de détermination (16), configurée pour, lorsque le SF obtenu par la puce de réseau est le premier indicateur, déterminer que l'échantillonnage doit être effectué ;
une unité de traitement (11) configurée pour, lorsque la détermination du fait que l'échantillonnage doit être effectué, effectuer une opération d'addition de X sur l'index de compteur à la réception d'un message, et lire une valeur de retour du compteur, où la valeur de retour comprend une valeur d'un Indicateur de Dépassement de Capacité, OF, et un index de compteur après que l'opération d'addition de X est effectuée, où X est une valeur prédéfinie, et la valeur du OF comprend : une première valeur prédéfinie ou une deuxième valeur prédéfinie, et où, la première valeur prédéfinie indique que le compteur dépasse la capacité après que l'opération d'addition de X est effectuée, et la deuxième valeur prédéfinie indique que le compteur ne dépasse pas la capacité après que l'opération d'addition de X est effectuée ;
une unité de jugement (12), configurée pour juger si la valeur du OF est la première valeur prédéfinie ; et
une unité d'échantillonnage (13), configurée pour, si la valeur du OF est la première valeur prédéfinie, effectuer l'échantillonnage,
**caractérisée en ce que** lorsqu'un chiffre du compteur est M et qu'un rapport d'échantillonnage est N, X est 2^{M}/N, et M et N sont des nombres entiers positifs.

5. Puce de réseau selon la revendication 4, comprenant en outre :
une unité de transfert (14), configurée pour, si la valeur du OF est la deuxième valeur prédéfinie, transférer le message sans effectuer l'échantillonnage.

6. Puce de réseau selon la revendication 4, dans laquelle l'échantillonnage comprend :
un échantillonnage de port et un échantillonnage de flux, et où l'échantillonnage de port comprend : un échantillonnage de type à monodiffusion, un échantillonnage de type à multidiffusion, ou un échantillonnage de type à commutation de labels multiprotocole, MPLS.

7. Support de stockage lisible par ordinateur, stockant une instruction exécutable par ordinateur, l'instruction exécutable par ordinateur étant utilisée pour exécuter le procédé selon l'une quelconque des revendications 1 à 3.
